# EUROPEAN PATENT APPLICATION

(11) **EP 4 787 888 A1**
(43) Date of publication of application: **05.08.2026**
(21) Application number: 24884149.6
(22) Date of filing: 19.08.2024
(51) Int. Cl.: H04Q 11/00

(54) **RESOURCE ALLOCATION METHOD AND APPARATUS FOR PASSIVE OPTICAL NETWORK SYSTEM**

(30) Priority: 30.10.2023 CN 202311429888
(71) Applicant: HUAWEI TECHNOLOGIES CO., LTD., Shenzhen 518129 (CN)
(72) Inventor: LIU, Gengchen, Shenzhen, Guangdong 518129 (CN); WANG, Wenming, Shenzhen, Guangdong 518129 (CN); LEI, Hao, Shenzhen, Guangdong 518129 (CN)
(74) Representative: Goddar, Heinz J.
(86) International application number: PCT/CN2024/113043
(87) International publication number: WO 2025/092142

(57) **Abstract**

This application provides a resource allocation method and system for a passive optical network PON system. The resource allocation method includes: An MFU obtains target information, where the target information is associated with a radio requirement corresponding to a first SFU and a radio requirement corresponding to a second SFU, each radio requirement corresponds to frequency bandwidth requirements of N terminal devices, and the radio requirement corresponding to the first SFU is greater than the radio requirement corresponding to the second SFU; and the MFU sends radio allocation information, where the radio allocation information indicates a first frequency bandwidth allocated to the first SFU and a second frequency bandwidth allocated to the second SFU, and the first frequency bandwidth is greater than the second frequency bandwidth. In the foregoing method, a radio resource requirement of connected user equipment is obtained, and a frequency bandwidth of an SFU device is actively adjusted and controlled according to the radio resource requirement, to ensure that the frequency bandwidth allocated by the MFU to the SFU adapts to a frequency bandwidth required by a wireless terminal device, thereby improving radio resource utilization.

## Description

This application claims priority to Chinese Patent Application No. 202311429888.6, filed with the China National Intellectual Property Administration on October 30, 2023, and entitled "RESOURCE ALLOCATION METHOD AND APPARATUS FOR PASSIVE OPTICAL NETWORK SYSTEM".

### TECHNICAL FIELD

This application relates to the field of optical communication, and in particular, to a resource allocation method and apparatus for a passive optical network system.

### BACKGROUND

A passive optical network PON uses a point-to-multipoint network topology. The system includes an optical line terminal OLT located at a central office, a plurality of optical network units ONUs located at a user end, and an optical distribution network ODN located between the OLT and the ONUs. In a passive optical network architecture, an OLT transmits data to one or more ONUs, and an ODN is configured to distribute and aggregate signal light. The signal light does not need to be relayed or amplified during transmission, so that a network structure with a high bandwidth, low costs, multi-user sharing, and easy deployment is implemented. The PON system may be applied to a plurality of scenarios such as broadband access and fiber to the home. In an architecture where a PON is integrated with a wireless network, capacity expansion and wide coverage of wireless broadband can be implemented. A fiber to the room FTTR scenario can be based on the architecture integrating the PON with the wireless network. To be specific, an optical networking terminal is deployed to interconnect with a home gateway, and wireless network technologies such as dual-band Wi-Fi and Wi-Fi 6 are used, to ensure whole-home network coverage. Based on a connection relationship between nodes in the PON, the OLT and the ONU may be used as a main fiber to the room node MFU or a sub fiber to the room node SFU of FTTR.

A dynamic bandwidth allocation method is introduced into the PON system to coordinate an uplink transmission occasion of the SFU, to avoid data scheduling conflicts. However, existing dynamic resource allocation methods only involve granting a slot to the SFU, and do not involve radio resource scheduling of the SFU. In addition, data transmission between the MFU and the SFU is decoupled from data transmission between the SFU and user equipment that is connected to the SFU through a wireless network. The MFU cannot obtain a data transmission status between the SFU and the terminal device that is connected to the SFU through the wireless network. Resources allocated by the MFU to the SFU do not match actual requirements of the SFU, causing a resource waste, a significant scheduling delay, and increased costs for system hardware devices. Therefore, in the architecture where the PON is integrated with the wireless network, how to appropriately allocate resources and improve resource utilization is an urgent problem to be resolved.

### SUMMARY

This application provides a resource allocation method and apparatus for a passive optical network system. An MFU determines a radio requirement of a terminal device connected to an SFU, and allocates a frequency bandwidth to the SFU according to the radio requirement of the terminal device connected to the SFU, to perform radio resource scheduling on the SFU, and improve resource utilization.

According to a first aspect, a resource allocation method for a passive optical network PON system is provided. The PON system includes a main fiber to the room unit MFU, and a first sub fiber to the room unit SFU and a second SFU that are connected to the MFU, the first SFU and the second SFU are connected to terminal devices through a wireless network, and the method includes: The MFU obtains target information, where the target information is associated with a radio requirement corresponding to the first SFU and a radio requirement corresponding to the second SFU, each radio requirement corresponds to frequency bandwidth requirements of N terminal devices, the N terminal devices are connected to the first SFU or the second SFU, N is an integer, and the radio requirement corresponding to the first SFU is greater than the radio requirement corresponding to the second SFU; and the MFU sends radio allocation information, where the radio allocation information indicates a first frequency bandwidth allocated to the first SFU and a second frequency bandwidth allocated to the second SFU, and the first frequency bandwidth is greater than the second frequency bandwidth. In the foregoing method, a radio resource requirement of connected user equipment is obtained, and a frequency bandwidth of an SFU device is actively adjusted and controlled according to the radio resource requirement, to ensure that the frequency bandwidth allocated by the MFU to the SFU adapts to a frequency bandwidth required by a wireless terminal device, and improve radio resource utilization.

With reference to the first aspect, in some implementations of the first aspect, the target information includes at least one of the following information corresponding to the first SFU and the second SFU: a quantity of connected wireless terminal devices, a type of a transmission service with the connected wireless terminal device, or physical layer information. The type of the transmission service may include an email, a video, a call, and the like. This is not limited in this application. The physical layer information may include at least one of the following: a radio frequency band, a radio frequency bandwidth, a radio modulation and coding scheme, or a radio guard interval. In this way, the MFU may correctly parse, based on one or more of the foregoing information, the frequency bandwidth requirements of the terminal devices connected to the first SFU and the second SFU.

With reference to the first aspect, in some implementations of the first aspect, the radio allocation information further indicates radio frequency bands, and/or radio modulation and coding schemes, and/or radio guard intervals allocated to the first SFU and the second SFU. In this way, the MFU may allocate radio resources to the first SFU and the second SFU based on the radio requirement corresponding to the first SFU and the radio requirement corresponding to the second SFU. In some implementations, the radio frequency band allocated to the first SFU does not overlap the radio frequency band allocated to the second SFU, to avoid a radio resource usage conflict, and further improve radio resource usage efficiency.

With reference to the first aspect, in some implementations of the first aspect, the MFU sends the radio allocation information through an allocation channel, and the allocation channel includes at least one of the following channels: a physical layer operation, administration, and maintenance channel, an optical network unit management and control interface channel, a private out-of-band channel, or a bandwidth allocation map channel. In this way, the allocation information is sent through any one or more of the foregoing four channels, to efficiently manage the first SFU and the second SFU.

With reference to the first aspect, in some implementations of the first aspect, the MFU sends the radio allocation information by using a channel switch announcement field in a radio management frame. For example, in an architecture integrating a centralized PON with a remote wireless network, a radio transceiver is disposed in the MFU, and the radio transceiver is configured to send a radio management frame, to send the radio allocation information to the first MFU and the second MFU.

With reference to the first aspect, in some implementations of the first aspect, the method further includes: The MFU sends bandwidth allocation information, where the bandwidth allocation information indicates a slot granted to the first SFU and a slot granted to the second SFU, and a total length of the slot granted to the first SFU is greater than a total length of the slot granted to the second SFU. In this way, the MFU may obtain a radio requirement of user equipment connected to the SFU, actively adjust and control a frequency bandwidth of an SFU device according to the radio requirement, and allocate a bandwidth to the SFU according to an active adjustment and control scheme, so that the MFU can predict a bandwidth requirement of the SFU and a frequency bandwidth requirement of the SFU in a next time period according to an allocation scheme of the MFU, and the foregoing process is repeatedly performed in the PON system, to ensure that the bandwidth allocated by the MFU to the SFU adapts to a resource required by a wireless terminal device, and improve resource utilization. In addition, the target information obtained by the MFU may further include buffer usage information of the first SFU and buffer usage information of the second SFU, so that the MFU may further grant a slot to the SFU based on the buffer usage information of the SFU and a frequency bandwidth requirement of the wireless device connected to the SFU.

With reference to the first aspect, in some implementations of the first aspect, the radio allocation information further indicates a first frequency bandwidth set and a second frequency bandwidth set, a frequency bandwidth in the first frequency bandwidth set corresponds to the terminal device connected to the first SFU, a frequency bandwidth in the second frequency bandwidth set corresponds to the terminal device connected to the second SFU, and a sum of frequency bandwidths in the first frequency bandwidth set is greater than a sum of frequency bandwidths in the second frequency bandwidth set; and the radio allocation information further carries a terminal device identifier, the terminal device identifier is used for identifying the terminal devices connected to the first SFU and the second SFU, and the terminal device identifier is in one-to-one correspondence with the frequency bandwidth in the first frequency bandwidth set and the frequency bandwidth in the second frequency bandwidth set. To be specific, after obtaining the radio requirements respectively corresponding to the first SFU and the second SFU, the MFU further allocates, based on radio requirements of one or more terminal devices connected to the first SFU and radio requirements corresponding to one or more terminal devices connected to the second SFU, frequency bandwidths to the one or more terminal devices connected to the first SFU, and frequency bandwidths to the one or more terminal devices connected to the second SFU, so that the MFU directly schedules radio resources of the terminal devices, to further improve radio resource utilization. The terminal device identifier carried in the radio allocation information may be an IP address of the terminal device.

According to a second aspect, a resource allocation apparatus for a PON system is provided. The PON system includes the resource allocation apparatus and a first SFU and a second SFU that are connected to the resource allocation apparatus, the first SFU and the second SFU are connected to terminal devices through a wireless network, and the apparatus includes: an obtaining module, configured to obtain target information, where the target information is associated with a radio requirement corresponding to the first SFU and a radio requirement corresponding to the second SFU, each radio requirement corresponds to frequency bandwidth requirements of N terminal devices, the N terminal devices are connected to the first SFU or the second SFU, N is an integer, and the radio requirement corresponding to the first SFU is greater than the radio requirement corresponding to the second SFU; and a sending module, configured to send radio allocation information, where the radio allocation information indicates a first frequency bandwidth allocated to the first SFU and a second frequency bandwidth allocated to the second SFU, and the first frequency bandwidth is greater than the second frequency bandwidth. In the foregoing apparatus, the obtaining module is configured to obtain a radio resource requirement of connected user equipment, and actively adjust and control a frequency bandwidth of an SFU device according to the radio resource requirement, to ensure that the frequency bandwidth allocated by the resource allocation apparatus to the SFU adapts to a frequency bandwidth required by a wireless terminal device, and improve radio resource utilization.

With reference to the second aspect, in some implementations of the second aspect, the target information includes at least one of the following information corresponding to the first SFU and the second SFU: a quantity of connected wireless terminal devices, a type of a transmission service with the connected wireless terminal device, or physical layer information. The type of the transmission service may include an email, a video, a call, and the like. This is not limited in this application. The physical layer information may include at least one of the following: a radio frequency band, a radio frequency bandwidth, a radio modulation and coding scheme, or a radio guard interval. Therefore, the resource allocation apparatus may correctly parse, based on one or more of the foregoing information, the frequency bandwidth requirements of the terminal devices connected to the first SFU and the second SFU.

With reference to the second aspect, in some implementations of the second aspect, the radio allocation information further indicates radio frequency bands, and/or radio modulation and coding schemes, and/or radio guard intervals allocated to the first SFU and the second SFU. Therefore, the resource allocation apparatus may allocate radio resources to the first SFU and the second SFU based on the radio requirement corresponding to the first SFU and the radio requirement corresponding to the second SFU. In some implementations, the radio frequency band allocated to the first SFU does not overlap the radio frequency band allocated to the second SFU, to avoid a radio resource usage conflict, and further improve radio resource usage efficiency.

With reference to the second aspect, in some implementations of the second aspect, the sending module sends the radio allocation information through an allocation channel, and the allocation channel includes at least one of the following channels: a physical layer operation, administration, and maintenance channel, an optical network unit management and control interface channel, a private out-of-band channel, or a bandwidth allocation map channel. In this way, the allocation information is sent through any one or more of the foregoing four channels, to efficiently manage the first SFU and the second SFU.

With reference to the second aspect, in some implementations of the second aspect, the sending module sends the radio allocation information by using a channel switch announcement field in a radio management frame. For example, in an architecture integrating a centralized PON with a remote wireless network, a radio transceiver is disposed in the resource allocation apparatus, and the radio transceiver is configured to send a radio management frame, to send the radio allocation information to a first resource allocation apparatus and a second resource allocation apparatus.

With reference to the second aspect, in some implementations of the second aspect, the sending module is further configured to send bandwidth allocation information, where the bandwidth allocation information indicates a slot granted to the first SFU and a slot granted to the second SFU, and a total length of the slot granted to the first SFU is greater than a total length of the slot granted to the second SFU. In this way, the resource allocation apparatus may obtain a radio requirement of user equipment connected to the SFU, actively adjust and control a frequency bandwidth of an SFU device according to the radio requirement, and allocate a bandwidth to the SFU according to an active adjustment and control scheme, so that the resource allocation apparatus can predict a bandwidth requirement of the SFU and a frequency bandwidth requirement of the SFU in a next time period according to an allocation scheme of the resource allocation apparatus, and the foregoing process is repeatedly performed in the PON system, to ensure that the bandwidth allocated by the resource allocation apparatus to the SFU adapts to a resource required by a wireless terminal device, and improve resource utilization. In addition, the target information obtained by the resource allocation apparatus may further include buffer usage information of the first SFU and buffer usage information of the second SFU, so that the resource allocation apparatus may further grant a slot to the SFU based on the buffer usage information of the SFU and a frequency bandwidth requirement of the wireless device connected to the SFU.

With reference to the second aspect, in some implementations of the second aspect, the radio allocation information further indicates a first frequency bandwidth set and a second frequency bandwidth set, a frequency bandwidth in the first frequency bandwidth set corresponds to the terminal device connected to the first SFU, a frequency bandwidth in the second frequency bandwidth set corresponds to the terminal device connected to the second SFU, and a sum of frequency bandwidths in the first frequency bandwidth set is greater than a sum of frequency bandwidths in the second frequency bandwidth set; and the radio allocation information further carries a terminal device identifier, the terminal device identifier is used for identifying the terminal devices connected to the first SFU and the second SFU, and the terminal device identifier is in one-to-one correspondence with the frequency bandwidth in the first frequency bandwidth set and the frequency bandwidth in the second frequency bandwidth set. To be specific, after obtaining the radio requirements respectively corresponding to the first SFU and the second SFU, the resource allocation apparatus further allocates, based on radio requirements of one or more terminal devices connected to the first SFU and radio requirements corresponding to one or more terminal devices connected to the second SFU, frequency bandwidths to the one or more terminal devices connected to the first SFU, and frequency bandwidths to the one or more terminal devices connected to the second SFU, so that the resource allocation apparatus directly schedules radio resources of the terminal devices, to further improve radio resource utilization. The terminal device identifier carried in the radio allocation information may be an IP address of the terminal device.

According to a third aspect, a resource allocation apparatus for a PON system is provided, including a processor, where the processor is configured to execute a computer program or instructions stored in a memory, so that the apparatus performs the method according to any one of the first aspect and the implementations of the first aspect. Specifically, the apparatus may include a unit and/or module configured to perform the method according to any one of the first aspect or the foregoing implementations of the first aspect.

According to a fourth aspect, a chip is provided. The chip includes a processor and a communication interface. The processor reads, through the communication interface, instructions stored in a memory, to perform the method according to any one of the first aspect and the foregoing implementations of the first aspect.

### BRIEF DESCRIPTION OF DRAWINGS

FIG. 1 is a diagram of an architecture integrating a PON system with a wireless network according to an embodiment of this application;
FIG. 2 is a diagram of a fiber to the room application scenario according to an embodiment of this application;
FIG. 3 is a diagram of dynamic bandwidth allocation according to an embodiment of this application;
FIG. 4 is a diagram of a resource allocation method for a PON system according to an embodiment of this application;
FIG. 5 is a diagram of another resource allocation method for a PON system according to an embodiment of this application;
FIG. 6 is a diagram of another resource allocation method for a PON system according to an embodiment of this application;
FIG. 7 is a diagram of a frame structure of an uplink packet according to an embodiment of this application;
FIG. 8 is a diagram of a resource allocation apparatus for a PON system according to an embodiment of this application;
FIG. 9 is a diagram of another resource allocation apparatus for a PON system according to an embodiment of this application; and
FIG. 10 is a diagram of another resource allocation apparatus for a PON system according to an embodiment of this application.

### DESCRIPTION OF EMBODIMENTS

The following describes technical solutions of this application with reference to the accompanying drawings.

The technical solutions in embodiments of this application may be applied to various passive optical network (passive optical network, PON) systems, for example, a next-generation PON (next-generation PON, NG-PON), an NG-PON 1, an NG-PON 2, a gigabit-capable PON (gigabit-capable PON, GPON), a 10 gigabit PON (10 gigabit PON, XG-PON), a 10-gigabit-capable symmetric passive optical network (10-gigabit-capable symmetric passive optical network, XGS-PON), an ethernet PON (Ethernet PON, EPON), a 10 gigabit EPON (10 gigabit EPON, 10G-EPON), a next-generation EPON (next-generation EPON, NG-EPON), a wavelength-division multiplexing (wavelength-division multiplexing, WDM) PON, a time- and wavelength-division multiplexing (time- and wavelength-division multiplexing, TWDM) PON, a point-to-point (point-to-point, P2P) WDM PON (P2P-WDM PON), an asynchronous transfer mode PON (asynchronous transfer mode PON, APON), a broadband PON (broadband PON, BPON), a 25 gigabit PON (25 gigabit PON, 25G-PON), a 50 gigabit PON (50 gigabit PON, 50G-PON), a 100 gigabit PON (100 gigabit PON, 100G-PON), a 25 gigabit EPON (25 gigabit EPON, 25G-EPON), a 50 gigabit EPON (50 gigabit EPON, 50G-EPON), a 100 gigabit EPON (100 gigabit EPON, 100G-EPON), and a GPON or an EPON at another rate. The technical solutions may be further used in an optical network, for example, an optical transport network (optical transport network, OTN) system.

A passive optical network (passive optical network, PON) system uses a point-to-multipoint (point-to-multipoint, P2MP) network topology. The system includes an optical line terminal (optical line terminal, OLT) located at a central office, a plurality of optical network units (optical network units, ONUs) located at a user end, and an optical distribution network (optical distribution network, ODN) located between the OLT and the ONUs. In a passive optical network architecture, an OLT transmits data to one or more ONUs, and an ODN is configured to distribute and aggregate signal light. The signal light does not need to be relayed or amplified during transmission, so that a network structure with a high bandwidth, low costs, multi-user sharing, and easy deployment is implemented. The PON system may be applied to a plurality of scenarios such as broadband access and fiber to the home. In some scenarios, the PON is integrated with a wireless network, so that capacity expansion and wide coverage of wireless broadband can be implemented.

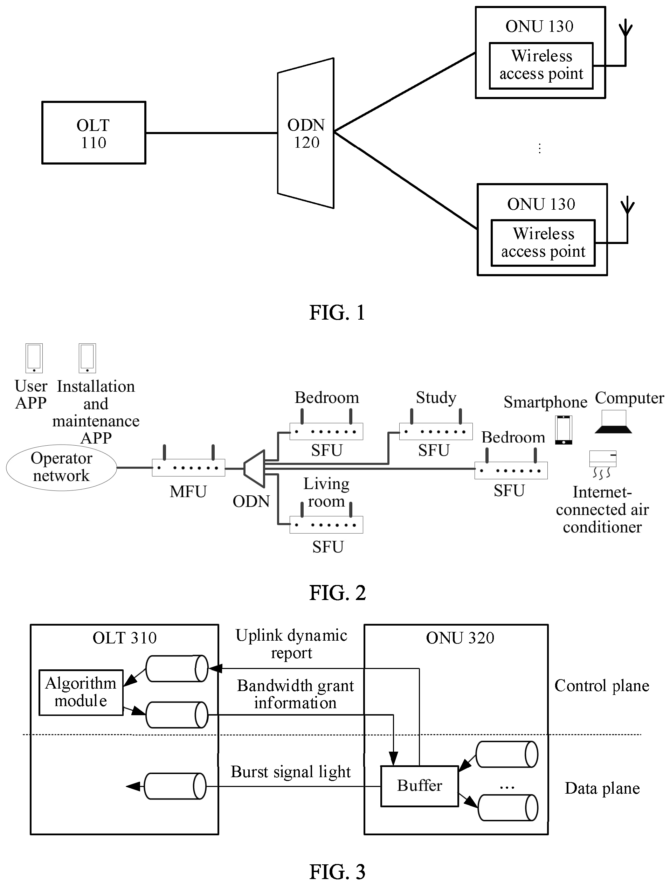

FIG. 1 is a diagram of an architecture integrating a PON system with a wireless network according to an embodiment of this application. As shown in FIG. 1, the architecture may include an OLT 110, an ODN 120, and one or more ONUs 130.

In the architecture, the OLT 110 may manage one or more ONUs 130 in a unified manner, and is configured to transmit data between the ONUs 130 and an upper-layer network. In uplink transmission, the one or more ONUs 130 divide an uplink transmission time period into several slots through time division, and the OLT 110 grants a slot to each ONU 130. The granted slot is used for allocating an uplink packet transmission window. Each ONU 130 transmits data in a corresponding uplink packet transmission window, and the data transmitted by each ONU 130 is propagated to the OLT 110 through a backbone fiber. The data is sent in sequence, so that an uplink data conflict is avoided. In downlink transmission, the OLT 110 sends data to the one or more ONUs 130 by broadcast. The OLT 110 encapsulates a downlink service into a frame, where the frame carries a plurality of data packets with variable lengths and corresponding IDs, and the frame is divided into a plurality of signals at the optical splitter ODN 120 and sent to each branch. After receiving data sent by the OLT, the ONU determines whether to process or discard the data packet based on an ID.

In an architecture integrating a PON with a wireless network, the ONU 130 is generally used as a master node of the wireless network. A wireless communication access point 140 may be configured in the ONU, so that a user can access the wireless network through the wireless communication access point, to implement a network connection. The wireless network may be specifically a wireless local area network (wireless local area network, WLAN), Wi-Fi (wireless fidelity), a cellular mobile network, a fourth generation (fourth generation, 4G) network, a fifth generation (fifth generation, 5G) network, or the like. This is not limited in this application. Specifically, user equipment connected to the ONU 130 may alternatively be a wireless terminal device, and the wireless terminal device may include a personal computer, a smartphone, a fixed-line phone, a router, or the like. This is not limited in this application.

In some implementations, the architecture integrating the PON with the wireless network may be an architecture integrating a distributed PON with a wireless network. The distributed PON may indicate that a plurality of ONUs 130 are located at different locations. In the architecture, a wireless signal transceiver may be configured in the ONU 130. After the ONU 130 receives a corresponding data packet, the wireless signal transceiver may convert data included in the data packet into a wireless signal, and transmit the wireless signal to user equipment through the wireless communication access point 140. In addition, after the wireless communication access point 140 receives the wireless signal sent by the user equipment, the wireless signal transceiver converts the wireless signal into a corresponding data stream, and reports the corresponding data stream to the OLT 110.

In some implementations, the architecture integrating the PON with the wireless network may be an architecture integrating a centralized PON with a remote wireless network. The centralized PON may indicate that a plurality of ONUs 130 are located at a same location. The remote wireless network may be a wireless network that extends coverage of a wireless signal through a wireless network amplifier, a repeater, or the like. In the remote wireless architecture, data may be transmitted to user equipment in an analog IQ (In-phase/Quadrature) modulation mode. In the architecture, the OLT 110 configures digital data (for example, a radio frame) that needs to be transmitted by the corresponding wireless communication access point 140 in the ONU 130, converts the digital data into an analog signal through an analog IQ modulator, and sends the analog signal to the user equipment through the wireless communication access point 140. Correspondingly, after receiving the analog signal sent by the user equipment, the wireless communication access point 140 converts the analog signal into the digital data through the analog IQ modulator, and the digital data is returned by the ONU 120.

It should be understood that FIG. 1 shows only a case in which one OLT is connected to a plurality of ONUs, and a specific architecture may further include a plurality of OLTs. In addition, FIG. 1 shows only a one-level connection architecture, and the PON architecture may alternatively be a multi-level architecture. This is not limited in this application.

FIG. 2 is a diagram of a fiber to the room application scenario according to an embodiment of this application. Fiber to the room (fiber to the room, FTTR) is to lay an optical fiber in each room based on fiber to the building (fiber to the building, FTTB) and fiber to the home (fiber to the home, FTTH).

As shown in FIG. 2, the FTTR network includes a main fiber to the room unit (main FTTR unit, MFU), a sub fiber to the room unit (sub FTTR unit, SFU), a home optical network (also referred to as a home ODN), an operator network, and the like. The MFU is located between the operator network and the SFU. The MFU is connected upward to the operator network through an optical network such as an XGPON or a 10G EPON, supports gigabit to the home, and provides an optical fiber interface for connecting to the SFU. As a home network center, the MFU can manage and configure all sub SFUs in a unified manner. The SFU is a distributed home wireless access device, and is distributed in each room of a home and is connected to the MFU through a home optical cable. In addition, the SFU provides a wireless interface or the like to connect to various home internet access terminals. The SFU may operate in a bridge mode. The MFU allocates and manages an IP of the SFU and an IP of another device connected to the SFU in a unified manner, so that an entire home network forms a unified and interoperable local area network. Devices connected to each SFU may implement local area network access operations such as projection and file sharing with each other in a super-gigabit bandwidth. A home optical network is a home optical cable infrastructure that includes an optical cable, an optical cable panel, and another necessary optical network component and that is deployed by using a dedicated tool and an auxiliary material.

An FTTR scenario may be based on the architecture integrating various PONs with wireless networks shown in FIG. 1. To be specific, an optical networking terminal is deployed to interconnect with a home gateway, and wireless network technologies such as dual-band Wi-Fi and Wi-Fi 6 are used, to ensure networking technologies of whole-home network coverage. In the architecture shown in FIG. 1 or FIG. 2, based on a connection relationship between nodes in the PON, the OLT and the ONU may be used as the MFU or the SFU of FTTR.

In the foregoing system, each SFU uses a backbone fiber as a transmission medium to transmit data. To avoid a data transmission conflict, a dynamic bandwidth allocation (dynamic bandwidth allocation, DBA) method is introduced into the system to coordinate an uplink transmission occasion of the SFU, to avoid a data scheduling conflict.

FIG. 3 is a diagram of dynamic bandwidth allocation according to an embodiment of this application. As shown in FIG. 3, an SFU 320 receives, on a data plane, data sent from user equipment, and temporarily stores the data into a buffer of the SFU 320. The SFU 320 sends, on a control plane, an uplink dynamic bandwidth report (uplink dynamic bandwidth report, DBRu) to an MFU 310, where the report carries buffer usage information of the SFU. After the MFU 310 receives the DBRu on the control plane, an algorithm module included in the MFU 310 determines, based on information such as a requirement of the SFU 320, total network load, and a priority corresponding to the SFU 320, a bandwidth allocated to the SFU 320, and sends bandwidth grant information to the SFU 320, to indicate a slot granted to the SFU 320. After receiving the bandwidth grant information, the SFU 320 sends burst signal light in a corresponding allocated slot, to transmit an uplink packet to the MFU 310.

However, a current dynamic resource allocation method only involves granting a slot to the SFU, and does not involve radio resource scheduling of the SFU. In addition, data transmission between the MFU and the SFU is decoupled from data transmission between the SFU and user equipment that is connected to the SFU through a wireless network. The MFU cannot obtain a data transmission status between the SFU and the terminal device that is connected to the SFU through the wireless network. A resource allocated by the MFU to the SFU does not match an actual requirement of the SFU, causing a resource waste, a significant scheduling delay, and increased costs for system hardware devices.

For example, the DBA allocation method is performed based on a process of reporting by the SFU, and collecting, calculating, and allocating by the MFU to grant the slots. It takes a long time (in milliseconds) from a moment at which new to-be-transmitted data enters an SFU buffer to a moment at which the SFU obtains a sending permission to upload the data. For a delay sensitive service with an unclear statistical multiplexing feature, a delay cost caused by the service is unbearable. When a remote wireless architecture is disposed, there are no concepts of a frame header, a frame trailer, and a frame length for an analog signal that needs to be transmitted by user equipment. Therefore, the MFU device cannot perform parsing. When a DBA conflict occurs, the SFU cannot discard the transmitted data, causing a waste of resources allocated by the MFU to the SFU. Therefore, in the architecture integrating the PON with the wireless network, how to appropriately allocate the resource and improve resource utilization is a problem that needs to be urgently resolved.

In view of this, this application provides a resource allocation method and apparatus for a passive optical network system. An MFU determines a radio requirement of a terminal device connected to an SFU, and allocates a frequency bandwidth to the SFU according to the radio requirement of the terminal device connected to the SFU, to perform radio resource scheduling on the SFU, and improve resource utilization.

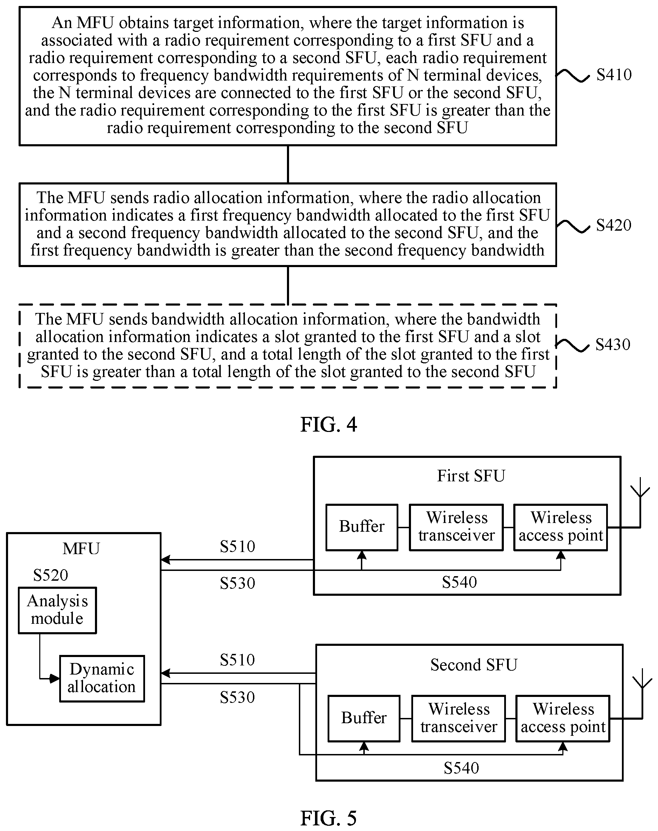

FIG. 4 is a diagram of a resource allocation method for a PON system according to an embodiment of this application. The PON system specifically includes an MFU, and a first SFU and a second SFU that are connected to the MFU, and the first SFU and the second SFU are connected to terminal devices through a wireless network. As shown in FIG. 4, the method includes steps S410 and S420.

S410: The MFU obtains target information, where the target information is associated with a radio requirement corresponding to the first SFU and a radio requirement corresponding to the second SFU, each radio requirement corresponds to frequency bandwidth requirements of N terminal devices, the N terminal devices are connected to the first SFU or the second SFU, N is an integer, and the radio requirement corresponding to the first SFU is greater than the radio requirement corresponding to the second SFU.

A method for the MFU to obtain the target information may be as follows: The first SFU and the second SFU send uplink packets to the MFU, and the MFU parses the uplink packets to obtain information included in the packets, to obtain the target information.

In some implementations, the target information includes at least one of the following information corresponding to the first SFU and the second SFU: a quantity of connected wireless terminal devices, a type of a transmission service with the connected wireless terminal device, or physical layer information. The type of the transmission service may include an email, a video, a call, and the like. This is not limited in this application. The physical layer information may include at least one of the following: a radio frequency band, a radio frequency bandwidth, a radio modulation and coding scheme, or a radio guard interval. In this way, the MFU may correctly parse, based on one or more of the foregoing information, the frequency bandwidth requirements of the terminal devices connected to the first SFU and the second SFU.

S420: The MFU sends radio allocation information, where the radio allocation information indicates a first frequency bandwidth allocated to the first SFU and a second frequency bandwidth allocated to the second SFU, and the first frequency bandwidth is greater than the second frequency bandwidth.

In some implementations, the radio allocation information further indicates radio frequency bands, and/or radio modulation and coding schemes, and/or radio guard intervals allocated to the first SFU and the second SFU. In this way, the MFU may allocate radio resources to the first SFU and the second SFU based on the radio requirement corresponding to the first SFU and the radio requirement corresponding to the second SFU. In some implementations, the radio frequency band allocated to the first SFU does not overlap the radio frequency band allocated to the second SFU, to avoid a radio resource usage conflict, and further improve radio resource usage efficiency.

In some implementations, the MFU sends the radio allocation information through an allocation channel, and the allocation channel includes at least one of the following channels: a physical layer operation, administration, and maintenance (physical layer operation, administration, and maintenance, PLOAM) channel, an optical network unit management and control interface (ONU management and control interface, OMCI) channel, a private out-of-band (out-of-band, OOB) channel, or a bandwidth allocation map (bandwidth map, BWmap) channel. In this way, the allocation information is sent through any one or more of the foregoing four channels, to efficiently manage the first SFU and the second SFU.

In some implementations, the radio allocation information is sent by using a channel switch announcement (channel switch announcement, CSA) field in a radio management (beacon) frame. For example, in an architecture integrating a centralized PON with a remote wireless network, a radio transceiver is disposed in the MFU, and the radio transceiver is configured to send a radio management frame, to send the radio allocation information to the first MFU and the second MFU.

In some implementations, the radio allocation information further indicates a first frequency bandwidth set and a second frequency bandwidth set, a frequency bandwidth in the first frequency bandwidth set corresponds to the terminal device connected to the first SFU, a frequency bandwidth in the second frequency bandwidth set corresponds to the terminal device connected to the second SFU, and a sum of frequency bandwidths in the first frequency bandwidth set is greater than a sum of frequency bandwidths in the second frequency bandwidth set. In addition, the radio allocation information further carries a terminal device identifier, the terminal device identifier is used for identifying the terminal devices connected to the first SFU and the second SFU, and the terminal device identifier is in one-to-one correspondence with the frequency bandwidth in the first frequency bandwidth set and the frequency bandwidth in the second frequency bandwidth set. To be specific, after obtaining the radio requirements respectively corresponding to the first SFU and the second SFU, the MFU further allocates, based on radio requirements of one or more terminal devices connected to the first SFU and radio requirements corresponding to one or more terminal devices connected to the second SFU, frequency bandwidths to the one or more terminal devices connected to the first SFU, and frequency bandwidths to the one or more terminal devices connected to the second SFU, so that the MFU directly schedules radio resources of the terminal devices, to further improve radio resource utilization. The terminal device identifier carried in the radio allocation information may be an IP address of the terminal device.

In the method shown in FIG. 4, a radio resource requirement of connected user equipment is obtained, and a frequency bandwidth of an SFU device is actively adjusted and controlled according to the radio resource requirement, to ensure that the frequency bandwidth allocated by the MFU to the SFU adapts to a frequency bandwidth required by a wireless terminal device, and improve radio resource utilization.

In some implementations, the method shown in FIG. 4 may further include step S430. S430: The MFU sends bandwidth allocation information, where the bandwidth allocation information indicates a slot granted to the first SFU and a slot granted to the second SFU, and a total length of the slot granted to the first SFU is greater than a total length of the slot granted to the second SFU. In this way, the MFU may obtain a radio requirement of user equipment connected to the SFU, actively adjust and control a frequency bandwidth of an SFU device according to the radio requirement, and allocate a bandwidth to the SFU according to an active adjustment and control scheme, so that the MFU can predict a bandwidth requirement of the SFU and a frequency bandwidth requirement of the SFU in a next time period according to an allocation scheme of the MFU, and form a cycle in the PON system, to ensure that the bandwidth allocated by the MFU to the SFU adapts to a resource required by a wireless terminal device, and improve resource utilization. In addition, the target information obtained by the MFU may further include buffer usage information of the first SFU and buffer usage information of the second SFU, so that the MFU may further grant a slot to the SFU based on the buffer usage information of the SFU and a frequency bandwidth requirement of the wireless device connected to the SFU.

In some implementations, the bandwidth allocation information is sent through at least one of the following channels: a PLOAM channel, an OMCI channel, an OOB channel, or a BWmap channel.

In the method shown in FIG. 4, the target information obtained by the MFU may be specifically target information in a first time period, and the radio allocation information and the bandwidth allocation information sent by the MFU may be specifically radio allocation information and bandwidth allocation information in a second time period. The first time period and the second time period may be adjacent time periods, and specific duration of the first time period and the second time period is determined with reference to a specific case.

The following describes the resource allocation method provided in this application with reference to a specific architecture integrating a PON with a wireless network.

FIG. 5 is a diagram of another resource allocation method for a PON system according to an embodiment of this application. The PON system may be an architecture integrating a distributed PON with a wireless network, and the resource allocation method applicable to the architecture may include steps S510 to S540.

S510: An MFU receives uplink packets sent by a first SFU and a second SFU, and correspondingly, the first SFU and the second SFU send the uplink packets to the MFU.

S520: The MFU obtains target information based on the uplink packets sent by the first SFU and the second SFU. Specifically, a parsing module in the MFU parses the uplink packets, to obtain the target information. The target information includes physical layer information corresponding to the first SFU and physical layer information corresponding to the second SFU. The physical layer information includes at least a radio frequency bandwidth corresponding to the first SFU and a radio frequency bandwidth corresponding to the second SFU. In addition, the physical layer information may further include at least one of the following: a radio frequency band, a radio modulation and coding scheme, or a radio guard interval. The physical layer information may be directly reported and obtained in the uplink packets through the first SFU and the second SFU. In addition, the MFU further parses the uplink packets, to obtain buffer usage information corresponding to the first SFU and buffer usage information corresponding to the second SFU.

S530: The MFU sends radio allocation information, where the radio allocation information indicates a first frequency bandwidth allocated to the first SFU and a second frequency bandwidth allocated to the second SFU, and the first frequency bandwidth is greater than the second frequency bandwidth. In addition, the radio allocation information may further indicate radio frequency bands, radio frequency bandwidths, radio modulation and coding schemes, radio guard intervals, and the like that are allocated to the first SFU and the second SFU. Correspondingly, the first SFU and the second SFU receive the radio allocation information.

The MFU may predict, based on physical layer information in a first time period, a radio resource required by a wireless communication access point in a second time period. The first SFU is used as an example. If a frequency bandwidth and a frequency band of the first SFU in the first time period are narrow, a data transmission rate determined in a modulation and coding scheme is low, and a radio time guard interval is large, so that it may be predicted that the wireless access point requires a small quantity of radio resources in the second time period, and a narrower frequency bandwidth is allocated to the first SFU. On the contrary, if a frequency bandwidth and a frequency band of the first SFU in the first time period are wide, a data transmission rate determined in a modulation and coding scheme is high, and a radio time guard interval is small, so that it may be predicted that the wireless access point requires a large quantity of radio resources in the second time period, and a larger frequency bandwidth is allocated to the first SFU.

S540: The MFU sends bandwidth allocation information, where the bandwidth allocation information indicates a slot granted to the first SFU and a slot granted to the second SFU, and a total length of the slot granted to the first SFU is greater than a total length of the slot granted to the second SFU. Correspondingly, the first SFU and the second SFU receive the bandwidth allocation information.

The MFU may predict, based on the physical layer information in the first time period, the total length of the slots required by the first SFU and the second SFU in the second time period. The first SFU is used as an example. If a frequency bandwidth and a frequency band in the first time period are narrow, a data transmission rate determined in a modulation and coding scheme is low, a radio time guard interval is large, and an expectation of a rapid increase in a buffer waterline of the first SFU is low, it may be predicted that a packet reporting window required by the first SFU in the second time period is small, and the total length of the slots granted by the MFU to the first SFU is shorter. On the contrary, if a frequency bandwidth and a frequency band of the first SFU in the first time period are wide, a data transmission rate determined in a modulation and coding scheme is high, a radio time guard interval is small, and an expectation of a rapid increase in a buffer waterline of the SFU is high, it may be predicted that a packet reporting window of the first SFU in the second time period is large, and the total length of the slots granted by the MFU to the first SFU is longer.

In an architecture integrating a distributed PON with a wireless network, an increase rate of the buffer waterline of the SFU is controlled by actively controlling radio resources of the first SFU and the second SFU. When the MFU performs DBA bandwidth allocation, a potential increase rate of the buffer waterline of the SFU may be used as an extra input for predictive bandwidth allocation. Compared with a conventional DBA solution in which a PON is separated from a wireless network, the resource allocation method provided in this application can improve overall scheduling efficiency of the system, increase a throughput, and reduce a delay.

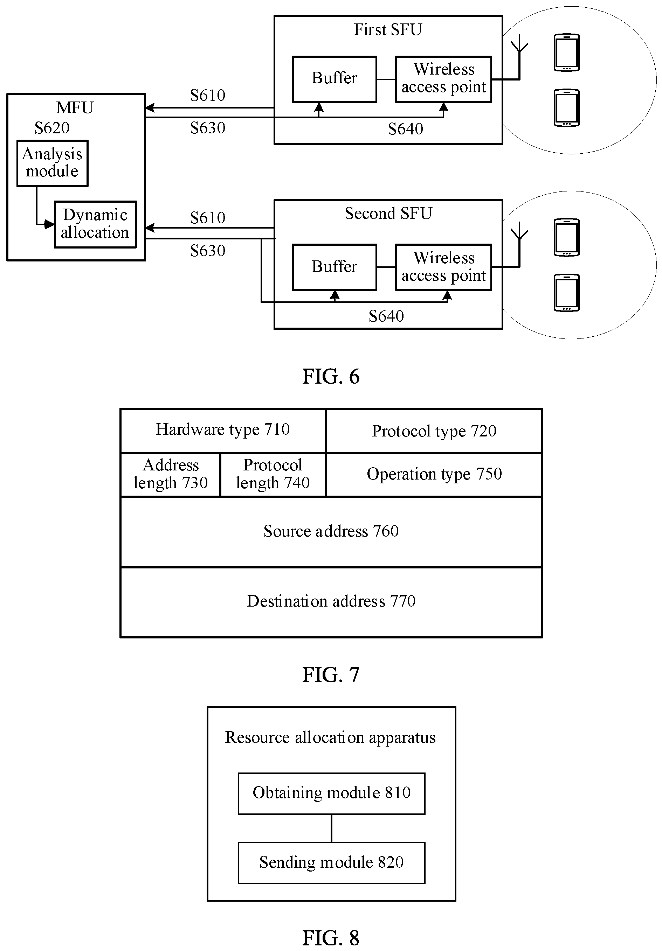

FIG. 6 is a diagram of another resource allocation method for a PON system according to an embodiment of this application. The PON system may be an architecture integrating a centralized PON with a remote wireless network, and the resource allocation method applicable to the architecture may include steps S610 to S640.

S610: An MFU receives uplink packets sent by a first SFU and a second SFU, and correspondingly, the first SFU and the second SFU send the uplink packets to the MFU.

S620: The MFU obtains target information based on the uplink packets sent by the first SFU and the second SFU. Specifically, a parsing module in the MFU parses the uplink packets, to obtain the target information. The target information includes a quantity of terminal devices connected to the first SFU, a quantity of wireless terminal devices connected to the second SFU, a type of a transmission service between the first SFU and the wireless terminal device, a type of a transmission service between the second SFU and the wireless terminal device, and the like. In addition, the MFU further parses the uplink packets, to obtain buffer usage information corresponding to the first SFU and buffer usage information corresponding to the second SFU. The parsing module in the MFU may specifically parse a packet header of the uplink packet, to obtain the quantity of terminal devices connected to the first SFU or the second SFU and/or the type of the transmission service between the first SFU or the second SFU and the terminal device. In addition, the MFU further parses the uplink packets, to obtain the buffer usage information corresponding to the first SFU and the buffer usage information corresponding to the second SFU.

FIG. 7 is a diagram of a frame structure of an uplink packet according to an embodiment of this application. As shown in FIG. 7, a packet header of the uplink packet may include parts such as a hardware type 710, a protocol type 720, an address length 730, a protocol length 740, an operation type 750, a source address 760, and a destination address 770. An example in which the uplink packet is sent by the first SFU is used. To obtain the quantity of terminal devices connected to the first SFU, the parsing module in the MFU may parse the part of the source address 760, and obtain, based on the part, the quantity of terminal devices connected to the first SFU. To obtain the type of the transmission service between the first SFU and the connected terminal device, the parsing module in the MFU may parse the operation type 750, where the operation type 750 indicates a type of the packet. It should be understood that a specific frame structure and a parsing manner shown in FIG. 7 are merely examples for description. How the parsing module in the MFU specifically parses the uplink packet is determined based on an actual protocol type. This is not limited in this application.

S630: The MFU sends radio allocation information, where the radio allocation information indicates a first frequency bandwidth allocated to the first SFU and a second frequency bandwidth allocated to the second SFU, and the first frequency bandwidth is greater than the second frequency bandwidth. In addition, the radio allocation information may further indicate radio frequency bands, radio frequency bandwidths, radio modulation and coding schemes, radio guard intervals, and the like that are allocated to the first SFU and the second SFU. Correspondingly, the first SFU and the second SFU receive the radio allocation information.

The MFU may predict, based on a corresponding quantity of terminal devices connected to the first SFU and a corresponding quantity of terminal devices connected to the second SFU in a first time period, and/or a corresponding type of a transmission service between the first SFU and the terminal device and a corresponding type of a transmission service between the second SFU and the terminal device in the first time period, frequency bandwidths required by the first SFU and the second SFU in a second time period. The first SFU is used as an example. If there are a smaller quantity of wireless terminal devices connected to a wireless communication access point, it may be predicted that a smaller quantity of radio resources are required in the second time period, and a narrower frequency bandwidth is allocated to the first SFU. On the contrary, if there are a larger quantity of wireless terminal devices connected to the first SFU, it may be predicted that a larger quantity of radio resources are required by the first SFU in the second time period, and a larger frequency bandwidth is allocated to the first SFU.

S640: The MFU sends bandwidth allocation information, where the bandwidth allocation information indicates a slot granted to the first SFU and a slot granted to the second SFU, and a total length of the slot granted to the first SFU is greater than a total length of the slot granted to the second SFU. Correspondingly, the first SFU and the second SFU receive the bandwidth allocation information.

The MFU may predict, based on the corresponding quantity of terminal devices connected to the first SFU and the corresponding quantity of terminal devices connected to the second SFU in the first time period, and/or the corresponding type of the transmission service between the first SFU and the terminal device or the corresponding type of the transmission service between the second SFU and the terminal device in the first time period, bandwidths required by the SFUs in the second time period. The first SFU is used as an example. If there are a smaller quantity of wireless terminal devices connected to the first SFU, it may be predicted that a smaller quantity of bandwidth resources are required by the first SFU in the second time period, and the total length of the slots granted by the MFU to the first SFU is shorter. On the contrary, if there are a larger quantity of wireless terminal devices connected to the first SFU, it may be predicted that a larger quantity of bandwidth resources are required by the first SFU in the second time period, and the total length of the slots granted by the MFU to the first SFU is longer.

In the architecture integrating the centralized PON with the remote wireless network, a data volume and traffic of an analog waveform that enters an ONT buffer may be directly controlled by actively controlling a radio resource of the wireless access point, so that the MFU can effectively schedule a waveform that lacks a clear frame header and frame trailer definition. Compared with a conventional DBA solution in which a PON is separated from a wireless network, the resource allocation method provided in this application can improve overall scheduling efficiency, increase a throughput, and reduce a delay.

The foregoing describes the method embodiments in embodiments of this application, and the following describes corresponding apparatus embodiments. The method embodiments and the apparatus embodiments correspond to each other. Therefore, for parts that are not described in detail, refer to each other.

FIG. 8 is a diagram of a resource allocation apparatus for a PON system according to an embodiment of this application. The PON system includes an MFU, and a first SFU and a second SFU that are connected to the MFU, where the first SFU and the second SFU are connected to terminal devices through a wireless network. As shown in FIG. 8, the resource allocation apparatus includes an obtaining module 810 and a sending module 820. The resource allocation apparatus may be used as an MFU.

The obtaining module 810 is configured to obtain target information, where the target information is associated with a radio requirement corresponding to the first SFU and a radio requirement corresponding to the second SFU. Each radio requirement corresponds to frequency bandwidth requirements of N terminal devices, the N terminal devices are connected to the first SFU or the second SFU, N is an integer, and the radio requirement corresponding to the first SFU is greater than the radio requirement corresponding to the second SFU.

A method for the MFU to obtain the target information may be as follows: The first SFU and the second SFU send uplink packets to the MFU, and the MFU parses the uplink packets to obtain information included in the packets, to obtain the target information.

In some implementations, the target information includes at least one of the following information corresponding to the first SFU and the second SFU: a quantity of connected wireless terminal devices, a type of a transmission service with the connected wireless terminal device, or physical layer information. The type of the transmission service may include an email, a video, a call, and the like. This is not limited in this application. The physical layer information may include at least one of the following: a radio frequency band, a radio frequency bandwidth, a radio modulation and coding scheme, or a radio guard interval. In this way, the MFU may correctly parse, based on one or more of the foregoing information, the frequency bandwidth requirements of the terminal devices connected to the first SFU and the second SFU.

The sending module 820 is configured to send radio allocation information, where the radio allocation information indicates a first frequency bandwidth allocated to the first SFU and a second frequency bandwidth allocated to the second SFU, and the first frequency bandwidth is greater than the second frequency bandwidth.

In some implementations, the radio allocation information further indicates radio frequency bands, and/or radio modulation and coding schemes, and/or radio guard intervals allocated to the first SFU and the second SFU. In this way, the MFU may allocate radio resources to the first SFU and the second SFU based on the radio requirement corresponding to the first SFU and the radio requirement corresponding to the second SFU. In some implementations, the radio frequency band allocated to the first SFU does not overlap the radio frequency band allocated to the second SFU, to avoid a radio resource usage conflict, and further improve radio resource usage efficiency.

In some implementations, the sending module 820 sends the radio allocation information through an allocation channel, and the allocation channel includes at least one of the following channels: a PLOAM channel, an OMCI channel, an OOB channel, or a BWmap channel.

In some implementations, a radio transceiver is configured in the sending module 820, and the radio transceiver is configured to send a radio management frame. The radio allocation information is sent by using a CSA field in the radio management frame.

In some implementations, the radio allocation information further indicates a first frequency bandwidth set and a second frequency bandwidth set, a frequency bandwidth in the first frequency bandwidth set corresponds to the terminal device connected to the first SFU, a frequency bandwidth in the second frequency bandwidth set corresponds to the terminal device connected to the second SFU, and a sum of frequency bandwidths in the first frequency bandwidth set is greater than a sum of frequency bandwidths in the second frequency bandwidth set. In addition, the radio allocation information further carries a terminal device identifier, the terminal device identifier is used for identifying the terminal devices connected to the first SFU and the second SFU, and the terminal device identifier is in one-to-one correspondence with the frequency bandwidth in the first frequency bandwidth set and the frequency bandwidth in the second frequency bandwidth set. To be specific, after obtaining the radio requirements respectively corresponding to the first SFU and the second SFU, the MFU further allocates, based on radio requirements of one or more terminal devices connected to the first SFU and radio requirements corresponding to one or more terminal devices connected to the second SFU, frequency bandwidths to the one or more terminal devices connected to the first SFU, and frequency bandwidths to the one or more terminal devices connected to the second SFU, so that the MFU directly schedules radio resources of the terminal devices, to further improve radio resource utilization. The terminal device identifier carried in the radio allocation information may be an IP address of the terminal device.

In some implementations, the sending module 820 is further configured to send bandwidth allocation information, where the bandwidth allocation information indicates a slot granted to the first SFU and a slot granted to the second SFU, and a total length of the slot granted to the first SFU is greater than a total length of the slot granted to the second SFU. In this way, the MFU may obtain a radio requirement of user equipment connected to the SFU, actively adjust and control a frequency bandwidth of an SFU device according to the radio requirement, and allocate a bandwidth to the SFU according to an active adjustment and control scheme, so that the MFU can predict a bandwidth requirement of the SFU and a frequency bandwidth requirement of the SFU in a next time period according to an allocation scheme of the MFU, and form a cycle in the PON system, to ensure that the bandwidth allocated by the MFU to the SFU adapts to a resource required by a wireless terminal device, and improve resource utilization. In addition, the target information obtained by the MFU may further include buffer usage information of the first SFU and buffer usage information of the second SFU, so that the MFU may further grant a slot to the SFU based on the buffer usage information of the SFU and a frequency bandwidth requirement of the wireless device connected to the SFU.

In some implementations, the sending module 820 sends the bandwidth allocation information through at least one of the following channels: a PLOAM channel, an OMCI channel, an OOB channel, or a BWmap channel.

In the apparatus shown in FIG. 8, the obtaining module is configured to obtain a radio resource requirement of connected user equipment, and actively adjust and control a frequency bandwidth of an SFU device according to the radio resource requirement, to ensure that the frequency bandwidth allocated by the MFU to the SFU adapts to a frequency bandwidth required by a wireless terminal device, and improve radio resource utilization.

Optionally, the resource allocation apparatus may be an apparatus including an MFU. Alternatively, the resource allocation apparatus may be a component configured in an MFU, for example, a chip in the MFU. In this case, the obtaining module 810 and the sending module 820 may specifically include an interface circuit, a pin, a processor, a memory, and the like. Specifically, the interface circuit may include an input circuit and an output circuit, where the obtaining module 810 may include the input circuit, a processing circuit, and the like; and the sending module 820 may include the output circuit, and the like.

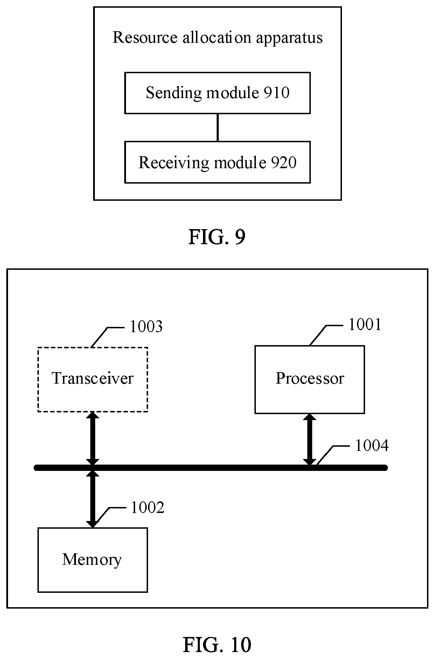

FIG. 9 is a diagram of another resource allocation apparatus for a PON system according to an embodiment of this application. The PON system includes an MFU, and a first SFU and a second SFU that are connected to the MFU, where the first SFU and the second SFU are connected to terminal devices through a wireless network. As shown in FIG. 9, the resource allocation apparatus includes a sending module 910 and a receiving module 920. The resource allocation apparatus may be used as a first SFU or a second SFU.

The sending module 910 is configured to send an uplink packet. The uplink packet is used by the MFU for analysis, so that the MFU obtains target information. The target information is associated with a radio requirement corresponding to the first SFU and a radio requirement corresponding to the second SFU. Each radio requirement corresponds to frequency bandwidth requirements of N terminal devices, the N terminal devices are connected to the first SFU or the second SFU, N is an integer, and the radio requirement corresponding to the first SFU is greater than the radio requirement corresponding to the second SFU.

The receiving module 920 is configured to receive radio allocation information, where the radio allocation information indicates a first frequency bandwidth allocated to the first SFU and a second frequency bandwidth allocated to the second SFU, and the first frequency bandwidth is greater than the second frequency bandwidth.

In some implementations, the radio allocation information further indicates radio frequency bands, and/or radio modulation and coding schemes, and/or radio guard intervals allocated to the first SFU and the second SFU. In this way, the MFU may allocate radio resources to the first SFU and the second SFU based on the radio requirement corresponding to the first SFU and the radio requirement corresponding to the second SFU. In some implementations, the radio frequency band allocated to the first SFU does not overlap the radio frequency band allocated to the second SFU, to avoid a radio resource usage conflict, and further improve radio resource usage efficiency.

In some implementations, the receiving module 920 receives the radio allocation information through an allocation channel, and the allocation channel includes at least one of the following channels: a PLOAM channel, an OMCI channel, an OOB channel, or a BWmap channel.

In some implementations, the radio allocation information further indicates a first frequency bandwidth set and a second frequency bandwidth set, a frequency bandwidth in the first frequency bandwidth set corresponds to the terminal device connected to the first SFU, a frequency bandwidth in the second frequency bandwidth set corresponds to the terminal device connected to the second SFU, and a sum of frequency bandwidths in the first frequency bandwidth set is greater than a sum of frequency bandwidths in the second frequency bandwidth set. In addition, the radio allocation information further carries a terminal device identifier, the terminal device identifier is used for identifying the terminal devices connected to the first SFU and the second SFU, and the terminal device identifier is in one-to-one correspondence with the frequency bandwidth in the first frequency bandwidth set and the frequency bandwidth in the second frequency bandwidth set. To be specific, after obtaining the radio requirements respectively corresponding to the first SFU and the second SFU, the MFU further allocates, based on radio requirements of one or more terminal devices connected to the first SFU and radio requirements corresponding to one or more terminal devices connected to the second SFU, frequency bandwidths to the one or more terminal devices connected to the first SFU, and frequency bandwidths to the one or more terminal devices connected to the second SFU, so that the MFU directly schedules radio resources of the terminal devices, to further improve radio resource utilization. The terminal device identifier carried in the radio allocation information may be an IP address of the terminal device.

In some implementations, the receiving module 920 is further configured to receive bandwidth allocation information, where the bandwidth allocation information indicates a slot granted to the first SFU and a slot granted to the second SFU, and a total length of the slot granted to the first SFU is greater than a total length of the slot granted to the second SFU. In this way, the MFU may obtain a radio requirement of user equipment connected to the SFU, actively adjust and control a frequency bandwidth of an SFU device according to the radio requirement, and allocate a bandwidth to the SFU according to an active adjustment and control scheme, so that the MFU can predict a bandwidth requirement of the SFU and a frequency bandwidth requirement of the SFU in a next time period according to an allocation scheme of the MFU, and form a cycle in the PON system, to ensure that the bandwidth allocated by the MFU to the SFU adapts to a resource required by a wireless terminal device, and improve resource utilization. In addition, the target information obtained by the MFU may further include buffer usage information of the first SFU and buffer usage information of the second SFU, so that the MFU may further grant a slot to the SFU based on the buffer usage information of the SFU and a frequency bandwidth requirement of the wireless device connected to the SFU.

In some implementations, the receiving module 920 receives the bandwidth allocation information through at least one of the following channels: a PLOAM channel, an OMCI channel, an OOB channel, or a BWmap channel.

In the apparatus shown in FIG. 9, the obtaining module is configured to obtain a radio resource requirement of connected user equipment, and actively adjust and control a frequency bandwidth of an SFU device according to the radio resource requirement, to ensure that the frequency bandwidth allocated by the MFU to the SFU adapts to a frequency bandwidth required by a wireless terminal device, and improve radio resource utilization.

Optionally, the resource allocation apparatus may be a device including an SFU. Alternatively, the resource allocation apparatus may be a component configured in an SFU, for example, a chip in the SFU. In this case, the sending module 910 and the receiving module 920 may be an interface circuit, a pin, or the like. Specifically, the interface circuit may include an input circuit and an output circuit, where the sending module 910 includes the output circuit, and the receiving module 920 may include the input circuit. In addition, a circuit may be further configured in the resource allocation apparatus.

FIG. 10 is a diagram of still another resource allocation apparatus for a PON system according to an embodiment of this application. The resource allocation apparatus includes a processor 1001. As shown in FIG. 10, the resource allocation apparatus may further include at least one memory 1002, configured to store a computer program or instructions and/or data. The memory 1002 is coupled to the processor 1001. The processor 1001 is configured to execute the computer program or the instructions and/or the data stored in the memory 1002, so that the method 500 in the foregoing method embodiments is performed. The coupling in this embodiment of this application may be an indirect coupling or a communication connection between apparatuses, units, or modules in an electrical form, a mechanical form, or another form, and is used for information exchange between the apparatuses, the units, or the modules. The processor 1001 may cooperate with the memory 1002. At least one of the at least one memory 1002 may be included in the processor 1001.

Optionally, the resource allocation apparatus includes one or more processors 1001.

Optionally, the memory 1002 and the processor 1001 may be integrated, or separately disposed.

The resource allocation apparatus may further include a transceiver 1003, configured to forward a service packet with another device by using a transmission medium, so that the apparatus may forward the service packet with the another device. Optionally, the transceiver 1003 may be an interface, a bus, a circuit, or an apparatus that can implement sending and receiving functions.

Optionally, a component configured to implement a receiving function in the transceiver 1003 may be considered as a receiving module, and a component configured to implement a sending function in the transceiver 1003 may be considered as a sending module. That is, the transceiver 1003 includes a receiver and a transmitter.

A specific connection medium between the processor 1001, the memory 1002, and the transceiver 1003 is not limited in this embodiment of this application. In this embodiment of this application, the processor 1001, the memory 1002, and the transceiver 1003 are connected to each other through a bus 1004 in FIG. 10. The bus is represented by a bold line in FIG. 10. A manner of connection between other components is merely an example for description, and is not limited thereto. The bus may be classified into an address bus, a data bus, a control bus, and the like.

It should be understood that, for ease of representation, only one bold line is used to represent the bus in FIG. 10, but this does not mean that there is only one bus or only one type of bus.

Optionally, as shown in FIG. 10, the resource allocation apparatus may further include a transceiver 1003 and/or a communication interface. The transceiver 1003 and/or the communication interface are/is configured to receive and/or send a signal. For example, the processor 1001 is configured to control the transceiver 1003 and/or the communication interface to receive and/or send data.

The transceiver sometimes may also be referred to as a transceiver machine, a transceiver module, a transceiver circuit, or the like. The receiver sometimes may also be referred to as a receiver machine, a receiving module, a receiver circuit, or the like. The transmitter sometimes may also be referred to as a transmitter machine, a transmitter, a transmitting module, a transmitting circuit, or the like.

For example, in an embodiment, the processor 1001 is configured as an SFU or a chip of the SFU to implement another operation or function. The transceiver 1003 is configured to implement forwarding of a service packet between the resource allocation apparatus and an MFU or a terminal device.

In another embodiment, the processor 1001 is configured as an MFU or a chip of the MFU to implement another operation or function. The transceiver 1003 is configured to implement forwarding of a service packet between the resource allocation apparatus and an SFU or a server.

One or more of the foregoing modules or units may be implemented by software, hardware, or a combination thereof. When any one of the foregoing modules or units is implemented by software, the software exists in a form of computer program instructions, and is stored in the memory. The processor may be configured to execute the program instructions and implement the foregoing method procedure. The processor may include but is not limited to, at least one of the following types: a central processing unit (central processing unit, CPU), a microprocessor, a digital signal processor (DSP), a microcontroller unit (microcontroller unit, MCU), or a computing device used for running software such as an artificial intelligence processor. Each computing device may include one or more cores configured to execute the software instructions to perform calculation or processing. The processor may be built in a SoC (system on a chip) or an application-specific integrated circuit (application-specific integrated circuit, ASIC), or may be an independent semiconductor chip. In addition to the core configured to perform calculation or processing by executing the software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by hardware, the hardware may be any one or any combination of a CPU, a microprocessor, a DSP, an MCU, an artificial intelligence processor, an ASIC, an SoC, an FPGA, a PLD, a dedicated digital circuit, a hardware accelerator, or a non-integrated discrete device. The hardware may run necessary software or does not depend on software to perform the foregoing method procedure.

When the foregoing modules or units are implemented by using software, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instruction may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

The objectives, technical solutions, and beneficial effects of this application are further described in detail in the foregoing specific implementations. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

According to the method provided in embodiments of this application, this application further provides a computer program product. The computer program product includes computer program code. When the computer program code is run on a computer, the computer is enabled to perform the method of the terminal device in the foregoing method embodiment.

According to the method provided in embodiments of this application, this application further provides a computer program product. The computer program product includes: computer program code. When the computer program code is run on a computer, the computer is enabled to perform the method of the first network device in the foregoing method embodiment.

An embodiment of this application further provides a processing apparatus, including a processor and an interface. The processor is configured to perform the resource allocation method in any one of the foregoing method embodiments.

An embodiment of this application further provides a chip. The chip includes a processor and a communication interface. The processor reads instructions stored in a memory by using the communication interface, to perform the resource allocation method in any one of the foregoing method embodiments.

An embodiment of this application further provides a resource allocation system. The system includes the MFU, at least one SFU, and at least one terminal device in the foregoing embodiment.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with examples described in embodiments disclosed in this specification, units, illustrative logical blocks (illustrative logical blocks) and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

It should be understood that "at least one" in embodiments of this application means one or more, and "a plurality of" means two or more. The term "and/or" describes an association relationship between associated objects, and indicates that three relationships may exist. For example, A and/or B may indicate the following three cases: A exists alone, both A and B exist, and B exists alone, where A and B may be singular or plural. The character "/" generally indicates an "or" relationship between the associated objects. "At least one of the following items (pieces)" or a similar expression thereof indicates any combination of these items, including any combination of a single item (piece) or a plurality of items (pieces). For example, at least one item (piece) of a, b, and c may indicate a, b, c, a and b, a and c, band c, or a, b, and c. Each of a, b, and c may be in a singular form or a plural form.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A resource allocation method for a passive optical network PON system, wherein the PON system comprises a main fiber to the room unit MFU, and a first sub fiber to the room unit SFU and a second SFU that are connected to the MFU, the first SFU and the second SFU are connected to terminal devices through a wireless network, and the method comprises:
obtaining target information by the MFU, wherein the target information is associated with a radio requirement corresponding to the first SFU and a radio requirement corresponding to the second SFU, each radio requirement corresponds to frequency bandwidth requirements of N terminal devices, the N terminal devices are connected to the first SFU or the second SFU, N is an integer, and the radio requirement corresponding to the first SFU is greater than the radio requirement corresponding to the second SFU; and
sending radio allocation information by the MFU, wherein the radio allocation information indicates a first frequency bandwidth allocated to the first SFU and a second frequency bandwidth allocated to the second SFU, and the first frequency bandwidth is greater than the second frequency bandwidth.

2. The method according to claim 1, wherein the target information comprises at least one of the following information corresponding to the first SFU and the second SFU:
a quantity of connected wireless terminal devices, a type of a transmission service with the connected wireless terminal device, or physical layer information.

3. The method according to claim 1 or 2, wherein the radio allocation information further indicates radio frequency bands, and/or radio modulation and coding schemes, and/or radio guard intervals allocated to the first SFU and the second SFU.

4. The method according to any one of claims 1 to 3, wherein the MFU sends the radio allocation information through an allocation channel, and the allocation channel comprises at least one of the following channels:
a physical layer operation, administration, and maintenance channel, an optical network unit management and control interface channel, a private out-of-band channel, or a bandwidth allocation map channel.

5. The method according to any one of claims 1 to 4, wherein the MFU sends the radio allocation information by using a channel switch announcement field in a radio management frame.

6. The method according to any one of claims 1 to 5, wherein the method further comprises:
sending bandwidth allocation information by the MFU, wherein the bandwidth allocation information indicates a slot granted to the first SFU and a slot granted to the second SFU, and a total length of the slot granted to the first SFU is greater than a total length of the slot granted to the second SFU.

7. The method according to any one of claims 1 to 6, wherein
the radio allocation information further indicates a first frequency bandwidth set and a second frequency bandwidth set, a frequency bandwidth in the first frequency bandwidth set corresponds to the terminal device connected to the first SFU, a frequency bandwidth in the second frequency bandwidth set corresponds to the terminal device connected to the second SFU, and a sum of frequency bandwidths in the first frequency bandwidth set is greater than a sum of frequency bandwidths in the second frequency bandwidth set; and
the radio allocation information further carries a terminal device identifier, the terminal device identifier is used for identifying the terminal devices connected to the first SFU and the second SFU, and the terminal device identifier is in one-to-one correspondence with the frequency bandwidth in the first frequency bandwidth set and the frequency bandwidth in the second frequency bandwidth set.

8. A resource allocation apparatus for a PON system, wherein the PON system comprises the resource allocation apparatus and a first SFU and a second SFU that are connected to the resource allocation apparatus, the first SFU and the second SFU are connected to terminal devices through a wireless network, and the apparatus comprises:
an obtaining module, configured to obtain target information, wherein the target information is associated with a radio requirement corresponding to the first SFU and a radio requirement corresponding to the second SFU, each radio requirement corresponds to frequency bandwidth requirements of N terminal devices, the N terminal devices are connected to the first SFU or the second SFU, N is an integer, and the radio requirement corresponding to the first SFU is greater than the radio requirement corresponding to the second SFU; and
a sending module, configured to send radio allocation information, wherein the radio allocation information indicates a first frequency bandwidth allocated to the first SFU and a second frequency bandwidth allocated to the second SFU, and the first frequency bandwidth is greater than the second frequency bandwidth.

9. The resource allocation apparatus according to claim 8, wherein the target information comprises at least one of the following information corresponding to the first SFU and the second SFU:
a quantity of connected wireless terminal devices, a type of a transmission service with the connected wireless terminal device, or physical layer information.

10. The resource allocation apparatus according to claim 8 or 9, wherein the radio allocation information further indicates radio frequency bands, and/or radio modulation and coding schemes, and/or radio guard intervals allocated to the first SFU and the second SFU.

11. The resource allocation apparatus according to any one of claims 8 to 10, wherein the sending module sends the radio allocation information through an allocation channel, and the allocation channel comprises at least one of the following channels:
a physical layer operation, administration, and maintenance channel, an optical network unit management and control interface channel, a private out-of-band channel, or a bandwidth allocation map channel.

12. The resource allocation apparatus according to any one of claims 8 to 11, wherein the sending module sends the radio allocation information by using a channel switch announcement field in a radio management frame.

13. The resource allocation apparatus according to any one of claims 8 to 12, wherein
the sending module is further configured to send bandwidth allocation information, wherein the bandwidth allocation information indicates a slot granted to the first SFU and a slot granted to the second SFU, and a total length of the slot granted to the first SFU is greater than a total length of the slot granted to the second SFU.

14. The resource allocation apparatus according to any one of claims 8 to 13, wherein
the radio allocation information further indicates a first frequency bandwidth set and a second frequency bandwidth set, a frequency bandwidth in the first frequency bandwidth set corresponds to the terminal device connected to the first SFU, a frequency bandwidth in the second frequency bandwidth set corresponds to the terminal device connected to the second SFU, and a sum of frequency bandwidths in the first frequency bandwidth set is greater than a sum of frequency bandwidths in the second frequency bandwidth set; and
the radio allocation information further carries a terminal device identifier, the terminal device identifier is used for identifying the terminal devices connected to the first SFU and the second SFU, and the terminal device identifier is in one-to-one correspondence with the frequency bandwidth in the first frequency bandwidth set and the frequency bandwidth in the second frequency bandwidth set.

15. A resource allocation apparatus for a PON system, comprising a processor, wherein the processor is configured to execute a computer program or instructions stored in a memory, to cause the apparatus to perform the method according to any one of claims 1 to 7.

16. A chip, wherein the chip comprises a processor and a communication interface; and the processor reads, through the communication interface, instructions stored in a memory, to perform the method according to any one of claims 1 to 7.
